# FASCICULE DE BREVET EUROPEEN

(11) **EP 2 012 138 B1**
(45) Date de publication et mention de la délivrance du brevet: **08.08.2018**
(21) Numéro de dépôt: 08159236.2
(22) Date de dépôt: 27.06.2008
(51) Int. Cl.: G01S 19/20

(54) **Procédé et système de contrôle d'integrité des mesures dans un système de navigation**
Verfahren und System zur Kontrolle der Messintegrität in einem Navigationssystem
Method and system for checking the integrity of the measurements in a navigation system

(30) Priorité: 03.07.2007 FR 0756244
(43) Date de publication de la demande: 07.01.2009
(73) Titulaire: Safran Electronics & Defense, 92100 Boulogne-Billancourt (FR)
(72) Inventeur: Vacher, Charlie, 75015 PARIS (FR); Ibanez, Guillaume, 75015 PARIS (FR); Goudon, Jean-Claude, 75015 PARIS (FR)
(74) Mandataire: Regimbeau

(56) Documents cités:
- FR-A- 2 749 665
- US-A- 5 631 838
- G. BROWN: "Receiver Autonomous Integrity Monitoring" GLOBAL POSITIONING SYSTEM : THEORY AND APPLICATIONS, VOLUME II, vol. 164, 1996, pages 143-165, XP008090948 USA

## Description

Le domaine de l'invention est celui des systèmes de navigation comprenant un récepteur de positionnement par satellites, par exemple un récepteur GPS.

L'invention concerne plus particulièrement un système de navigation et un procédé de contrôle d'un tel système aptes à assurer l'intégrité de la solution de navigation fournie par un tel système.

Dans le domaine des systèmes de navigation, et en particulier pour les systèmes de navigation utilisant des pseudo-distances fournies par un système de positionnement par satellites, une des difficultés majeures et source régulière d'erreur de positionnement est la gestion et la détection des multitrajets indirects correspondant à :
- une réflexion du signal émis par le satellite avant d'atteindre le récepteur ;
- l'absence de réception du signal direct.

En plus de dégrader significativement la position calculée par le récepteur GPS, de tels phénomènes affectent effectivement l'intégrité de la position calculée par le récepteur GPS dans la mesure où ils ne sont pas traités, ni pris en compte, par les mécanismes de vérification d'intégrité classiquement mis en oeuvre.

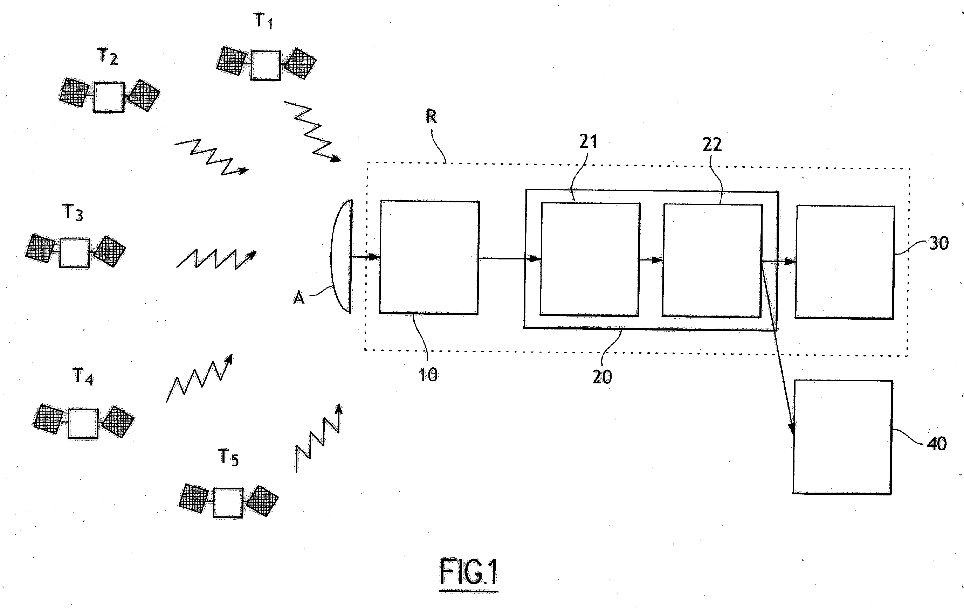

On a représenté sur la figure 1, un schéma de principe de la surveillance autonome d'intégrité de récepteur (ou RAIM pour « Receiver Autonomous Integrity Monitoring ») classiquement mise en oeuvre dans un récepteur GPS.

Le récepteur R dispose d'une antenne A apte à recevoir des signaux GPS en provenance d'une pluralité de satellites.

Sur la figure 1, on a par souci de clarté uniquement représenté cinq satellites T₁-T₅. On comprendra toutefois que pour réaliser la surveillance RAIM, on doit considérer une pluralité n de satellites, avec n au moins égal à 5. En pratique, on observe un nombre moyen n de 8 satellites.

Le récepteur R comporte des moyens 10 adaptés pour calculer, pour chaque signal GPS en provenance d'un satellite T₁-T₅ poursuivi par le récepteur, un ensemble de mesures brutes de navigation (également dénommées « raw GPS measurements »). Ces mesures brutes de navigation comprennent typiquement les pseudo-distances, les pseudo-vitesses, des indicateurs de performance associés - par exemple l'indicateur UERE (« User Equivalent Range Error ») désignant l'erreur sur la mesure de pseudo-distance récepteur-satellite - ainsi que l'heure de mesure UTC (« Universal Time Coordinated ») correspondante.

Les ensembles de données brutes de navigation sont envoyées à un module RAIM 20 qui surveille la cohérence globale de la constellation de satellites en utilisant toutes les mesures GPS brutes effectivement fournies par les moyens de calcul 10.

Le module RAIM 20 comprend typiquement deux sous-modules 21, 22 agencés en série.

Le premier sous-module 21 est un détecteur de saut dont la fonctionnalité définie dans la norme aéronautique civile DO-229C consiste à rejeter les mesures brutes pour lesquelles un saut plus important qu'un seuil donné apparaît par rapport à l'échantillon précédent.

Les mesures non exclues par le détecteur de saut 21 sont fournies au second sous-module 22 dont la fonctionnalité, tel que cela est défini dans la norme DO-229C, consiste à réaliser une détection et une exclusion des fautes. Le sous-module 22 (également dénommé FDE pour « Fault Detector & Exclusion ») vérifie à cet effet la cohérence globale des ensembles de mesures brutes, et détecte et/ou exclut les mesures brutes qui engendrent une incohérence dans la constellation de satellites.

Les mesures brutes restantes à la fin du processus RAIM (données non exclues par les sous-modules 21 et 22) sont marquées comme étant « valides ». Ces mesures valides sont alors utilisées pour élaborer la solution de navigation, par un filtre de navigation GPS pur 30, ou encore par un filtre de navigation hybride inertiel/GPS 40. La solution de navigation comprend typiquement les paramètres de navigation PVT : Position/Vitesse/Temps.

On comprend donc que selon la surveillance autonome d'intégrité RAIM standard, sont prises en considération les mesures brutes calculées pour l'ensemble des satellites poursuivis par le récepteur. On vient ensuite détecter une incohérence de constellation parmi toutes ces mesures brutes, pour le cas échéant exclure les mesures brutes à l'origine de cette incohérence.

Il en découle que les mesures brutes entachées d'erreur, mais qui ne génèrent pas d'incohérence de constellation ne sont pas détectées et/ou exclues par la surveillance RAIM. De telles mesures se voient alors marquées comme étant valides, et utilisées pour l'élaboration de la solution de navigation.

On relèvera également que la surveillance RAIM a pour objectif de détecter et d'exclure une incohérence, et de protéger la position calculée en présence d'une et d'une seule mesure défaillante.

Les mesures brutes correspondant à un multitrajet indirect, dont on a vu précédemment qu'elles affectent pourtant l'intégrité de la solution de navigation ne génèrent pas nécessairement d'incohérence dans la constellation. L'intégrité de la solution de navigation n'est alors pas garantie.

Une situation selon laquelle plusieurs multitrajets indirects sont présents n'est également pas prévue par la surveillance RAIM. En présence d'une telle situation, la surveillance RAIM se trouvera alors dans l'incapacité d'exclure les incohérences, même si elle parvient à les détecter. Encore une fois, dans ce cas l'intégrité de la solution de navigation n'est pas garantie.

Il existe donc un besoin pour améliorer la surveillance d'intégrité, notamment pour limiter l'impact des multitrajets indirects, en évitant d'utiliser dans l'élaboration de la solution de navigation des mesures brutes entachées d'erreur, telles que celles correspondant à un multitrajet indirect (et en particulier celles correspondant à un multitrajet purement indirect pour lequel seul le signal réfléchi, mais pas le signal direct, est reçu par le système de navigation).

Dans l'art antérieur, on connait du document US 5,631,838 un procédé de contrôle d'intégrité d'un système GNSS utilisé par un système de navigation, dans lequel un satellite est marqué comme vérifié lorsque la comparaison entre :
- la distance entre le système de navigation et le satellite, calculée sur la base du temps de parcours d'un signal entre le satellite et le système de navigation, et
- la distance entre le système de navigation et le satellite, calculée sur la base de données d'éphéméride et d'une solution de navigation,
est inférieure à un seuil.

L'invention a pour objectif de répondre au besoin précité, et propose à cet effet, selon un premier aspect, un procédé de contrôle d'un système de navigation selon la revendication 1.

Certains aspects préférés, mais non limitatifs, de ce procédé sont les suivants :
- il comprend les étapes préalables de poursuite d'un nouveau transmetteur, et d'invalidation du nouveau transmetteur de sorte que l'ensemble de mesures brutes de navigation calculé pour le transmetteur invalidé n'est pas utilisé dans l'élaboration de la solution de navigation avant contrôle de la cohérence dudit ensemble avec la solution de navigation élaborée à partir des transmetteurs valides ;
- les transmetteurs valides sont cycliquement invalidés ;
- le contrôle de cohérence comporte une mesure de l'écart entre :
   - la pseudo-distance entre le système de navigation et le transmetteur invalide, calculée pour ledit transmetteur invalide ;
   - et une pseudo-distance entre le système de navigation et le transmetteur invalide, estimée à l'aide des mesures brutes de navigation calculées pour les transmetteurs valides ;
- on évalue la position du système de navigation à l'aide des pseudo-distances calculées pour les transmetteurs valides, et on estime la pseudo-distance à partir de ladite position évaluée et de données d'éphéméride concernant ledit transmetteur invalide ;
- le contrôle de cohérence comporte une mesure de l'écart entre :
   - la pseudo-vitesse du système de navigation calculée pour ledit transmetteur invalide ;
   - et une pseudo-vitesse du système de navigation estimée à l'aide des mesures brutes de navigation mesurées pour les transmetteurs valides ;
- on évalue la vitesse du système de navigation à l'aide des pseudo-vitesses calculées pour les transmetteurs valides, et on estime la pseudo-vitesse à partir de ladite vitesse évaluée et de données d'éphéméride concernant ledit transmetteur invalide ;
- on met en oeuvre le contrôle de cohérence des pseudo-distances et le contrôle de cohérence des pseudo-vitesses ;
- la cohérence est avérée lorsque le contrôle de cohérence a été passé avec succès consécutivement une pluralité de fois ;
- les ensembles de mesures brutes de navigation passant le contrôle de cohérence correspondent à des ensembles non rejetés par une surveillance autonome d'intégrité RAIM.

Selon un second aspect, l'invention concerne un système de navigation selon la revendication 11. D'autres aspects, buts et avantages de la présente invention apparaîtront mieux à la lecture de la description détaillée suivante de formes de réalisation préférées de celle-ci, donnée à titre d'exemple non limitatif, et faite en référence aux dessins annexés sur lesquels :
- la figure 1, déjà commentée, est un schéma d'un système de navigation mettant en oeuvre une surveillance autonome d'intégrité RAIM standard ;
- la figure 2 est un schéma d'un système de navigation selon un mode de réalisation possible du second aspect de l'invention.

Dans ce qui suit, on prend l'exemple du système GPS de positionnement par satellites. On comprendra toutefois que l'invention n'est pas limitée à ce système particulier, mais a vocation à s'étendre à tout type de système de positionnement par satellites du type GNSS (Global Navigation Satellite System), en particulier au futur système Galileo.

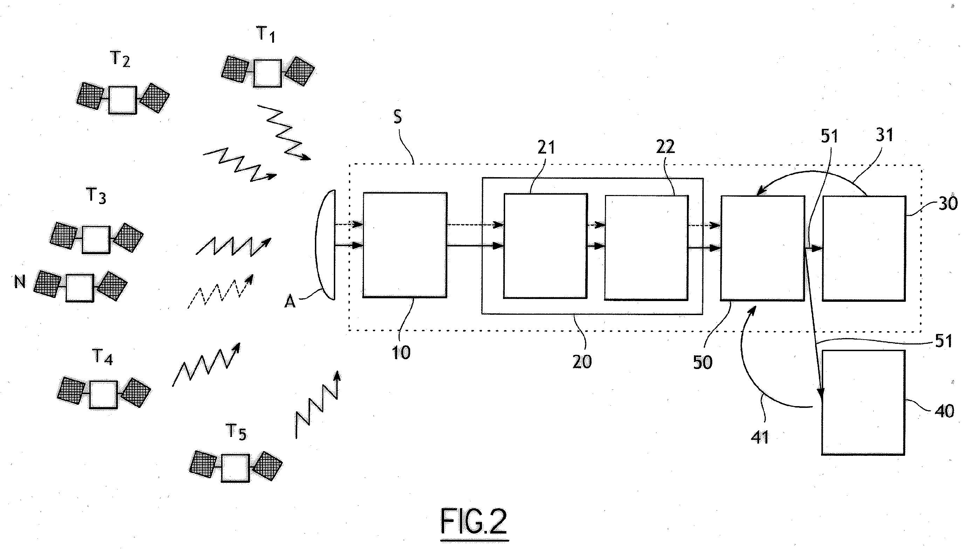

On a représenté sur la figure 2 un système de navigation S selon un mode de réalisation possible de l'invention. Certains composants du système S sont semblables à des composants du système R de la figure 1 ; ces composants semblables portent alors la même référence sur les figures 1 et 2.

Le système S comprend ainsi une antenne A apte à recevoir des signaux GPS en provenance de satellites T₁-T₅, N en orbite autour de la terre. Le système S comprend également des moyens 10 de calcul d'un ensemble de mesures brutes de navigation pour chacun des satellites poursuivi par le système S. Ces mesures brutes sont fournies à un module RAIM 20 qui comprend un sous-module détecteur de saut 21 et un sous-module FDE de détection et d'exclusion des fautes 22. Les données de mesure disponibles en sortie du module RAIM sont marquées comme étant valides.

Le système S comporte par ailleurs des moyens pour élaborer la solution de navigation (typiquement les paramètres de navigation PVT : Position/Vitesse/Temps), sous la forme d'un filtre de navigation GPS pur 30, ou encore d'un filtre de navigation hybride inertiel/GPS 40.

On considère qu'à l'instant T₀, la solution de navigation est élaborée à l'aide des ensembles de mesures brutes de navigation correspondant aux satellites T₁-T₅. Ce sous-ensemble de mesures brutes est ainsi marqué comme étant valide.

A l'instant T₀, un nouveau signal GPS issu d'un satellite N est poursuivi par le système S. Un nouvel ensemble de mesures brutes de navigation, correspondant au satellite entrant N, est alors calculé par les moyens 10.

Tous les ensembles de mesures brutes de navigation (y compris le nouvel ensemble correspondant au satellite entrant N) sont fournies au module RAIM 20, dans lequel le contrôle d'intégrité standard décrit précédemment est mis en oeuvre.

On se place dans l'hypothèse selon laquelle le nouvel ensemble de mesures brutes de navigation (correspondant au nouveau satellite N) n'est pas rejeté, d'une manière ou d'une autre, par le module RAIM.

On rappelle que classiquement, cet ensemble est marqué comme étant valide par le module RAIM, et est alors utilisé pour l'élaboration de la solution de navigation.

Dans le cadre de l'invention, on applique le principe selon lequel on ne fait pas confiance à un nouvel ensemble de mesures brutes (satellite entrant N) tant que sa cohérence avec les ensembles de mesures brutes déjà disponibles (correspondants aux satellites T₁-T₅) n'a pas pu être vérifiée.

A cet égard l'invention propose, alors même que le module RAIM 20 a conclu à l'intégrité de l'ensemble de mesures brutes relatif au satellite entrant N, de marquer cet ensemble comme étant invalide. Les mesures brutes entrantes relatives au satellite N ne sont donc pas utilisées dans l'élaboration de la solution de navigation.

L'invention propose alors de contrôler la cohérence de l'ensemble de mesures brutes de navigation calculé pour le satellite N marqué comme invalide, avec la solution de navigation élaborée, par l'un ou l'autre des filtres 30, 40, à partir des mesures brutes calculées pour les satellites T₁-T₅ marqués comme valides. En d'autres termes, on vérifie la cohérence de toute mesure provenant d'un satellite nouvellement poursuivi avec la solution de navigation élaborée avec les anciens ensembles de mesures brutes (les ensembles correspondants aux satellites T₁-T₅ déjà poursuivis).

Afin de réaliser ce contrôle de cohérence, le système S selon l'invention comporte, intercalés entre la sortie du module RAIM 20 et l'entrée du filtre 20, 30 d'élaboration de la solution de navigation, des moyens 50 de contrôle d'intégrité adaptés pour contrôler, pour un satellite N dont l'ensemble de mesures brutes de navigation n'est pas utilisé dans l'élaboration de la solution de navigation, la cohérence de l'ensemble de mesures brutes de navigation calculé pour ledit transmetteur N, avec la solution de navigation.

Ces moyens 50 peuvent en outre être adaptés pour rejeter, en cas d'incohérence, l'ensemble de mesures brutes de navigation calculé pour ledit transmetteur N de l'élaboration de la solution de navigation.

Sur la figure 2, on a représenté par une flèche 51 la fourniture, par les moyens 50 de contrôle d'intégrité à destination du filtre GPS pur 30 ou du filtre hybride inertiel/GPS 40, des ensembles de mesures brutes de navigation ayant passés successivement le contrôle d'intégrité RAIM standard (module 20), et le contrôle d'intégrité selon l'invention (moyens 50).

Sur la figure 2, on a représenté par une flèche 31, respectivement 41, la solution de navigation PVT fournie par le filtre GPS pur 30, respectivement par le filtre hybride inertiel/GPS 40, aux moyens 50 de contrôle d'intégrité. Cette solution de navigation, élaborée avec les mesures brutes des satellites valides (ici satellites T₁-T₅) est destinée à être confrontée, dans les moyens 50 de contrôle d'intégrité, avec les mesures brutes du satellite N marqué comme invalide.

Selon l'invention, un satellite est ainsi marqué, par les moyens 50 de contrôle d'intégrité, comme étant :
- valide lorsque son ensemble de mesures brutes de navigation est considéré comme pouvant être utilisé dans l'élaboration de la solution de navigation ;
- invalide tant que la cohérence de l'ensemble de mesures brutes de navigation calculé pour le transmetteur invalide avec la solution de navigation élaborée à partir des transmetteurs valides n'est pas avérée.

Le satellite est rejeté, et ses mesures brutes non fournies à un filtre 30, 40 d'élaboration de la solution de navigation, lorsque le contrôle de cohérence conclut à une non-cohérence des mesures issues du satellite invalide avec la solution de navigation élaborée à partir des mesures issues des satellites valides.

Ainsi, selon un mode de réalisation de l'invention, lorsqu'un nouveau satellite N est poursuivi, les mesures brutes mesurés pour ce satellite entrant N sont invalidées de sorte que l'ensemble de mesures brutes calculé pour ce satellite invalidé n'est pas utilisé dans l'élaboration de la solution de navigation avant contrôle de la cohérence dudit ensemble avec la solution de navigation élaborée à partir des transmetteurs valides.

Selon un autre mode de réalisation possible de l'invention, pris seul ou en combinaison avec le mode discuté précédemment relatif au contrôle de cohérence des mesures brutes de navigation d'un satellite entrant, on traite le cas des satellites valides. Selon cet autre mode de réalisation, on réalise une étape d'invalidation d'un satellite préalablement valide (par exemple satellite T₁), pour l'exclure de l'élaboration de la solution de navigation (en d'autres termes les mesures brutes du satellite T₁ ne sont pas fournies aux filtres 30, 40), et n'autoriser sa réutilisation dans l'élaboration de la solution de navigation et ne le re-valider qu'après contrôle de la cohérence de l'ensemble de mesures brutes de navigation calculé pour le satellite T₁ invalidé avec la solution de navigation élaborée à partir des seuls satellites valides restants T₂-T₅.

Cet autre mode de réalisation peut bien entendu être mis en oeuvre pour tout ou partie des satellites valides, de manière à vérifier la cohérence des mesures brutes de navigation d'un satellite valide avec la solution de navigation élaborée à partir des mesures brutes de navigation des autres satellites valides. L'invention prévoit en particulier de cycliquement invalider les satellites valides, de manière à tester tour à tour la cohérence de leurs mesures brutes de navigation.

Prenant l'exemple du contrôle de cohérence sur le satellite entrant N, le contrôle de cohérence selon l'invention peut comporter pour le satellite invalide N, une mesure de l'écart entre la pseudo-distance mesurée Pd_{N} (il s'agit d'une mesure issue de l'ensemble de mesures brutes de navigation calculé pour le satellite invalide N) et une pseudo-distance *P̂d_{N}* indépendante de la pseudo-distance mesurée Pd_{N}, estimée à l'aide des mesures brutes de navigation calculées pour les satellites valides T₁-T₅.

La pseudo-distance estimée *P̂d_{N}* peut être calculée en utilisant l'ensemble des pseudo-distances Pd₁-Pd₅ mesurées pour les satellites valides T₁-T₅, pour évaluer la position du système de navigation, et on détermine la pseudo-distance estimée *P̂d_{N}* à partir de ladite position évaluée et de données d'éphéméride concernant ledit transmetteur.

On comprend que le contrôle de cohérence sur les pseudo-distances permet de réaliser un test de vraisemblance sur la contribution de la pseudo-distance mesurée Pd_{N} par rapport à la position (telle qu'évaluée à l'aide des mesures brutes des transmetteurs valides, sans utiliser les mesures brutes du transmetteur N).

Prenant toujours l'exemple du contrôle de cohérence sur le satellite entrant N, le contrôle de cohérence selon l'invention peut comporter pour le satellite invalide N, une mesure de l'écart entre la pseudo-vitesse mesurée Pv_{N} (il s'agit d'une mesure issue de l'ensemble de mesures brutes de navigation calculé pour le satellite invalide N) et une pseudo-vitesse *P̂v_{N}* indépendante de la pseudo-distance mesurée Pv_{N}, estimée à l'aide des mesures brutes de navigation calculées pour les satellites valides T₁-T₅.

La pseudo-vitesse estimée *P̂v_{N}* peut être calculée en utilisant l'ensemble des pseudo-vitesses Pv₁-Pv₅ mesurées pour les satellites valides T₁-T₅, pour évaluer la vitesse du système de navigation, et en calculant la pseudo-vitesse estimée *P̂v_{N}* à partir de ladite position évaluée et de données d'éphéméride concernant ledit transmetteur.

Le contrôle de cohérence sur les pseudo-vitesses permet ainsi de réaliser un test de vraisemblance sur la contribution de la pseudo-vitesse mesurée Pv_{N} par rapport à la vitesse (telle qu'évaluée à l'aide des mesures brutes des transmetteurs valides, sans utiliser les mesures brutes du transmetteur N).

Selon un mode de réalisation préférentiel de l'invention, on réalise successivement le contrôle de cohérence sur les pseudo-distances présenté ci-dessus, puis le contrôle de cohérence sur les pseudo-vitesses présenté ci-dessus.

Dans le cadre de l'invention, un satellite invalide (par exemple un satellite entrant, ou un satellite valide qui a été invalidé) dont on a testé la cohérence des mesures brutes de navigation avec la solution de navigation élaborée avec les mesures brutes de navigation des satellites valides, n'est pas marqué comme étant valide tant que le contrôle de cohérence n'a pas été passé avec succès x fois consécutivement.

Le paramètre x, indicatif de la durée du contrôle mis en oeuvre dans les moyens 50 de contrôle d'intégrité, et représentant le nombre consécutif de tests devant être passés avec succès avant que les mesures brutes du satellite invalide puissent être prises en considération dans l'élaboration de la solution de navigation (le satellite étant alors marqué comme valide) peut notamment être adapté pour établir un compromis entre la nature du phénomène de multitrajet (purement) indirect, et la durée du traitement avant incorporation des mesures brutes calculées pour un satellite nouvellement poursuivi.

Dans le cas où le contrôle de cohérence s'avère négatif, par exemple lorsque l'on constate que le contrôle de cohérence n'a pas été passé avec succès une pluralité de fois consécutivement, le signal GPS du satellite invalide poursuivi est désélectionné, et l'on peut lancer un nouveau processus d'acquisition et de poursuite de ce signal par le système de navigation.

On a décrit précédemment le cas où les ensembles de mesures brutes de navigation passant le contrôle de cohérence selon l'invention correspondent à des ensembles non rejetés par une surveillance autonome d'intégrité RAIM. L'invention n'est toutefois pas limitée à une mise en oeuvre en addition d'un contrôle d'intégrité RAIM, mais peut bien entendu être mise en oeuvre de manière autonome, ou en complément d'autre type de contrôle d'intégrité, afin de s'assurer que tout nouvel ensemble de mesures brutes ne sera utilisé pour élaborer la solution de navigation que si ce nouvel ensemble est cohérent avec les ensembles de mesures brutes déjà utilisés.

On aura compris que le procédé et le système objets de l'invention permettent notamment d'éviter d'incorporer dans le calcul de la solution de navigation des mesures GPS brutes provenant d'un multitrajet (purement) indirect, et plus généralement d'éviter d'incorporer dans le calcul de la solution de navigation des mesures GPS brutes non cohérentes avec les mesures GPS brutes existantes, mais non suffisamment incohérentes pour générer un incohérence de constellation détectable par la surveillance d'intégrité RAIM.

## Revendications

1. Procédé de contrôle d'un système de navigation (S) comprenant un récepteur GNSS disposant d'une antenne (A) apte à recevoir des signaux GNSS en provenance d'une pluralité de transmetteurs (T₁-T₅,N) et des moyens adaptés pour calculer, pour chaque transmetteur (T₁-T₅,N), un ensemble de mesures GNSS brutes et élaborer une solution de navigation (PVT) à partir d'une pluralité d'ensembles de mesures GNSS brutes, dans lequel,
- un transmetteur est marqué comme valide lorsque son ensemble de mesures GNSS brutes est considéré comme suffisamment cohérent pour pouvoir être utilisé dans l'élaboration de la solution de navigation, et un transmetteur est marqué comme invalide tant que la cohérence de l'ensemble de mesures GNSS brutes calculé pour le transmetteur invalide avec la solution de navigation élaborée à partir des transmetteurs valides n'est pas avérée,
- pour un transmetteur (N) dont l'ensemble de mesures GNSS brutes n'est pas utilisé dans l'élaboration de la solution de navigation, on contrôle la cohérence de l'ensemble de mesures GNSS brutes calculé pour ledit transmetteur (N) avec la solution de navigation, et
- lorsque la cohérence est avérée, on utilise l'ensemble de mesures GNSS brutes calculé pour ledit transmetteur (N) dans l'élaboration de la solution de navigation,
**caractérisé en ce que** :
- le procédé comprend en outre, pour un transmetteur initialement valide (T₁), une étape préalable d'invalidation dudit transmetteur pour l'exclure de l'élaboration de la solution de navigation, et n'autoriser sa réutilisation dans l'élaboration de la solution de navigation et ne le re-valider qu'après contrôle de la cohérence de l'ensemble de mesures GNSS brutes calculé pour ce transmetteur invalidé (T₁), avec la solution de navigation élaborée à partir des transmetteurs valides (T₂-T₅).

2. Procédé selon la revendication 1, comprenant les étapes préalables de poursuite d'un nouveau transmetteur (N), et d'invalidation du nouveau transmetteur de sorte que l'ensemble de mesures GNSS brutes calculé pour le transmetteur invalidé n'est pas utilisé dans l'élaboration de la solution de navigation avant contrôle de la cohérence dudit ensemble avec la solution de navigation élaborée à partir des transmetteurs valides (T₁-T₅).

3. Procédé selon la revendication 1, dans lequel les transmetteurs valides sont cycliquement invalidés.

4. Procédé selon l'une des revendications 1 à 3, dans lequel le contrôle de cohérence comporte une mesure de l'écart entre :
- la pseudo-distance (Pd_{N}) entre le système de navigation et le transmetteur invalide (N), calculée pour ledit transmetteur invalide ;
- et une pseudo-distance (*P̂d_{N}*) entre le système de navigation et le transmetteur invalide, estimée à l'aide des mesures GNSS brutes calculées pour les transmetteurs valides (T₁-T₅).

5. Procédé selon la revendication 4, dans lequel on évalue la position du système de navigation à l'aide des pseudo-distances (Pd₁-Pd₅) calculées pour les transmetteurs valides (T₁-T₅), et on estime la pseudo-distance (*P̂d_{N}*) à partir de ladite position évaluée et de données d'éphéméride concernant ledit transmetteur invalide.

6. Procédé selon l'une des revendications 1 à 3, dans lequel le contrôle de cohérence comporte une mesure de l'écart entre :
- la pseudo-vitesse (Pv_{N}) du système de navigation calculée pour ledit transmetteur invalide (N) ;
- et une pseudo-vitesse (*P̂v_{N}*) du système de navigation estimée à l'aide des mesures GNSS brutes mesurées pour les transmetteurs valides (T₁-T₅).

7. Procédé selon la revendication 6, dans lequel on évalue la vitesse du système de navigation à l'aide des pseudo-vitesses (Pv₁-Pv₅) calculées pour les transmetteurs valides (T₁-T₅), et on estime la pseudo-vitesse (*P̂d_{N}*) à partir de ladite vitesse évaluée et de données d'éphéméride concernant ledit transmetteur invalide.

8. Procédé selon l'une des revendications 1 à 3, dans lequel on met en oeuvre le contrôle de cohérence selon l'une des revendications 4 ou 5, et le contrôle de cohérence selon l'une des revendications 6 ou 7.

9. Procédé selon l'une des revendications 4 à 8, dans lequel la cohérence est avérée lorsque le contrôle de cohérence a été passé avec succès consécutivement une pluralité de fois.

10. Procédé selon l'une des revendications 1 à 9, dans lequel les ensembles de mesures GNSS brutes passant le contrôle de cohérence correspondent à des ensembles non rejetés par une surveillance autonome d'intégrité RAIM.

11. Système de navigation comprenant un récepteur GNSS disposant d'une antenne (A) apte à recevoir des signaux en provenance d'une pluralité de transmetteurs (T₁-T₅,N), des moyens de calcul (10), adaptés pour calculer, pour chaque transmetteur (T₁-T₅,N), un ensemble de mesures GNSS brutes, et des moyens (40, 50) configurés pour élaborer une solution de navigation (41, 51) à partir d'une pluralité d'ensembles de mesures GNSS brutes, le système comportant en outre des moyens (50) configurés pour contrôler, pour un transmetteur (N) dont l'ensemble de mesures GNSS brutes n'est pas utilisé dans l'élaboration de la solution de navigation, la cohérence de l'ensemble de mesures GNSS brutes calculé pour ledit transmetteur (N) avec la solution de navigation, un transmetteur étant marqué comme valide lorsque son ensemble de mesures GNSS brutes est considéré comme suffisamment cohérent pour pouvoir être utilisé dans l'élaboration de la solution de navigation, et un transmetteur étant marqué comme invalide tant que la cohérence de l'ensemble de mesures GNSS brutes calculé pour le transmetteur invalide avec la solution de navigation élaborée à partir des transmetteurs valides n'est pas avérée, dans lequel :
- les moyens (40, 50) configurés pour élaborer une solution de navigation sont configurés pour, une fois la cohérence avérée, utiliser l'ensemble de mesures GNSS brutes calculé pour ledit transmetteur (N), et
**caractérisé en ce que** :
- lesdits moyens sont en outre configurés pour mettre en oeuvre, pour un transmetteur initialement valide (T₁), une étape préalable d'invalidation dudit transmetteur pour l'exclure de l'élaboration de la solution de navigation, et n'autoriser sa réutilisation dans l'élaboration de la solution de navigation et ne le re-valider qu'après contrôle de la cohérence de l'ensemble de mesures GNSS brutes calculé pour ce transmetteur invalidé (T₁), avec la solution de navigation élaborée à partir des transmetteurs valides (T₂-T₅).

## Patentansprüche

1. Verfahren zur Kontrolle eines Navigationssystems (S), das einen GNSS-Empfänger umfasst, welcher über eine Antenne (A) verfügt, die in der Lage ist, GNSS-Signale aus einer Vielzahl von Sendern (T₁-T₅,N) zu empfangen, und Mittel, die dafür ausgebildet sind, für jeden Sender (T₁-T₅,N) einen Satz an GNSS-Rohmessungen zu berechnen und anhand einer Vielzahl von GNSS-Rohmessungssätzen eine Navigationslösung (PVT) zu erarbeiten, wobei
- ein Sender als gültig markiert wird, wenn sein Satz an GNSS-Rohmessungen als ausreichend kohärent erachtet wird, um in der Erarbeitung der Navigationslösung verwendet werden zu können, und ein Sender als ungültig markiert wird, solange die Kohärenz des für den ungültigen Sender berechneten Satzes an GNSS-Rohmessungen mit der anhand der gültigen Sender erarbeiteten Navigationslösung nicht erwiesen ist,
- für einen Sender (N), dessen Satz an GNSS-Rohmessungen nicht in der Erarbeitung der Navigationslösung verwendet wird, die Kohärenz des für den Sender (N) berechneten Satzes an GNSS-Rohmessungen mit der Navigationslösung kontrolliert wird, und
- wenn die Kohärenz erwiesen ist, der für den Sender (N) berechnete Satz an GNSS-Rohmessungen in der Erarbeitung der Navigationslösung verwendet wird, **dadurch gekennzeichnet, dass**:
- das Verfahren weiter für einen ursprünglich gültigen Sender (T₁) einen vorausgehenden Schritt des Ungültigerklärens des Senders umfasst, um denselben aus der Erarbeitung der Navigationslösung auszuschließen und erst nach Kontrolle der Kohärenz des für diesen für ungültig erklärten Sender (T₁) berechneten Satzes an GNSS-Rohmessungen mit der anhand der gültigen Sender (T₂-T₅) erarbeiteten Navigationslösung seine erneute Verwendung in der Erarbeitung der Navigationslösung zuzulassen und ihn erneut für gültig zu erklären.

2. Verfahren nach Anspruch 1, umfassend die vorausgehenden Schritte des Verfolgens eines neuen Senders (N) und des Ungültigerklärens des neuen Senders, derart, dass der für den für ungültig erklärten Sender berechnete Satz an GNSS-Rohmessungen vor Kontrolle der Kohärenz des Satzes mit der anhand der gültigen Sender (T₁-T₅) erarbeiteten Navigationslösung nicht in der Erarbeitung der Navigationslösung verwendet wird.

3. Verfahren nach Anspruch 1, wobei die gültigen Sender zyklisch für ungültig erklärt werden.

4. Verfahren nach einem der Ansprüche 1 bis 3, wobei die Kohärenzkontrolle eine Messung umfasst der Abweichung zwischen:
- der für den ungültigen Sender berechneten Pseudostrecke (Pd_{N}) zwischen dem Navigationssystem und dem ungültigen Sender (N);
- und einer mithilfe der für die gültigen Sender (T₁-T₅) berechneten GNSS-Rohmessungen geschätzten Pseudostrecke (*P̂d_{N}*) zwischen dem Navigationssystem und dem ungültigen Sender.

5. Verfahren nach Anspruch 4, wobei die Position des Navigationssystems mithilfe der für die gültigen Sender (T₁-T₅) berechneten Pseudostrecken (Pd₁-Pd₅) ermittelt wird und die Pseudostrecke (*P̂d_{N}*) anhand der ermittelten Position und von den ungültigen Sender betreffenden Ephemeridendaten geschätzt wird.

6. Verfahren nach einem der Ansprüche 1 bis 3, wobei die Kohärenzkontrolle eine Messung umfasst der Abweichung zwischen:
- der für den ungültigen Sender (N) berechneten Pseudogeschwindigkeit (Pv_{N}) des Navigationssystems;
- und einer mithilfe der für die gültigen Sender (T₁-T₅) gemessenen GNSS-Rohmessungen geschätzten Pseudogeschwindigkeit (*P̂v_{N}*) des Navigationssystems.

7. Verfahren nach Anspruch 6, wobei die Geschwindigkeit des Navigationssystems mithilfe der für die gültigen Sender (T₁-T₅) berechneten Pseudogeschwindigkeiten (Pv₁-Pv₅) ermittelt wird, und die Pseudogeschwindigkeit (*P̂d_{N}*) anhand der ermittelten Geschwindigkeit und von den ungültigen Sender betreffenden Ephemeridendaten geschätzt wird.

8. Verfahren nach einem der Ansprüche 1 bis 3, wobei die Kohärenzkontrolle nach einem der Ansprüche 4 oder 5, und die Kohärenzkontrolle nach einem der Ansprüche 6 oder 7 umgesetzt werden.

9. Verfahren nach einem der Ansprüche 4 bis 8, wobei die Kohärenz erwiesen ist, wenn die Kohärenzkontrolle eine Vielzahl von Malen nacheinander mit Erfolg bestanden wurde.

10. Verfahren nach einem der Ansprüche 1 bis 9, wobei die GNSS-Rohmessungssätze, welche die Kohärenzkontrolle bestehen, Sätzen entsprechen, welche von einer autonomen Integritätsüberwachung RAIM nicht zurückgewiesen werden.

11. Navigationssystem, umfassend einen GNSS-Empfänger, welcher über eine Antenne (A) verfügt, die in der Lage ist, Signale aus einer Vielzahl von Sendern (T₁-T₅,N) zu empfangen, Berechnungsmittel (10), die dafür ausgebildet sind, für jeden Sender (T₁-T₅,N) einen Satz an GNSS-Rohmessungen zu berechnen, und Mittel (40, 50), die dafür ausgebildet sind, anhand einer Vielzahl von GNSS-Rohmessungssätzen eine Navigationslösung (41, 51) zu erarbeiten, wobei das System weiter Mittel (50) umfasst, die dafür ausgebildet sind, für einen Sender (N), dessen Satz an GNSS-Rohmessungen nicht in der Erarbeitung der Navigationslösung verwendet wird, die Kohärenz des für den Sender (N) berechneten Satzes an GNSS-Rohmessungen mit der Navigationslösung zu kontrollieren, wobei ein Sender als gültig markiert wird, wenn sein Satz an GNSS-Rohmessungen als ausreichend kohärent erachtet wird, um in der Erarbeitung der Navigationslösung verwendet werden zu können, und ein Sender als ungültig markiert wird, solange die Kohärenz des für den ungültigen Sender berechneten Satzes an GNSS-Rohmessungen mit der anhand der gültigen Sender erarbeiteten Navigationslösung nicht erwiesen ist,
wobei:
- die Mittel (40, 50), die dafür ausgebildet sind, eine Navigationslösung zu erarbeiten, dafür ausgebildet sind, wenn die Kohärenz einmal erwiesen ist, den für den Sender (N) berechneten Satz an GNSS-Rohmessungen zu verwenden, und
**dadurch gekennzeichnet, dass**:
- die Mittel weiter dafür ausgebildet sind, für einen ursprünglich gültigen Sender (T₁) einen vorausgehenden Schritt des Ungültigerklärens des Senders umzusetzen, um denselben aus der Erarbeitung der Navigationslösung auszuschließen und erst nach Kontrolle der Kohärenz des für diesen für ungültig erklärten Sender (T₁) berechneten Satzes an GNSS-Rohmessungen mit der anhand der gültigen Sender (T₂-T₅) erarbeiteten Navigationslösung seine erneute Verwendung in der Erarbeitung der Navigationslösung zuzulassen und ihn erneut für gültig zu erklären.

## Claims

1. Method for checking a navigation system (S) comprising a GNSS receiver having an antenna (A) able to receive GNSS signals from a plurality of transmitters (T₁-T₅,N) and means suitable for calculating, for each transmitter (T₁-T₅,N), a set of raw GNSS measurements and to elaborate a navigation solution (PVT) from a plurality of sets of raw GNSS measurements, wherein,
- a transmitter is marked as valid when its set of raw GNSS measurements is considered to be sufficiently coherent to be able to be used in the elaboration of the navigation solution, and a transmitter is marked as invalid as long as the coherency of the set of raw GNSS measurements calculated for the invalid transmitter with the navigation solution elaborated from valid transmitters is not proved,
- for a transmitter (N) of which the set of raw GNSS measurements is not used in the elaboration of the navigation solution, the coherency of the set of raw GNSS measurements calculated for said transmitter (N) with the navigation solution is checked, and
- when the coherency is proved, the set of raw GNSS measurements calculated for said transmitter (N) in the elaboration of the navigation solution is used, **characterised in that**:
- the method further comprises, for an initially valid transmitter (T₁), a prior step of invalidating said transmitter in order to exclude it from the elaboration of the navigation solution, and to authorise the reuse thereof in the elaboration of the navigation solution and to revalidate it only after checking of the coherency of the set of raw GNSS measurements calculated for this invalidated transmitter (T₁), with the navigation solution elaborated from valid transmitters (T₂-T₅) .

2. Method according to claim 1, comprising the prior steps of continuing with a new transmitter (N), and of invalidating the new transmitter in such a way that the set of raw GNSS measurements calculated for the invalidated transmitter is not used in the elaboration of the navigation solution before checking the coherency of said set with the navigation solution elaborated from valid transmitters (T₁-T₅).

3. Method according to claim 1, wherein the valid transmitters are cyclically invalidated.

4. Method according to one of claims 1 to 3, wherein the checking of the coherency includes a measurement of the difference between:
- the pseudo-distance (Pd_{N}) between the navigation system and the invalid transmitter (N), calculated for said invalid transmitter;
- and a pseudo-distance (*P̂d_{N}*) between the navigation system and the invalid transmitter, estimated using raw GNSS measurements calculated for the valid transmitters (T₁-T₅).

5. Method according to claim 4, wherein the position of the navigation system is evaluated using pseudo-distances (Pd₁-Pd₅) calculated for the valid transmitters (T₁-T₅), and the pseudo-distance (*P̂d_{N}*) is estimated using said evaluated position and ephemeris data concerning said invalid transmitter.

6. Method according to one of claims 1 to 3, wherein the checking of the coherency includes a measurement of the difference between:
- the pseudo-speed (PV_{N}) of the navigation system calculated for said invalid transmitter (N);
- and a pseudo-speed (*P̂v_{N}*) of the navigation system estimated using raw GNSS measurements measured for the valid transmitters (T₁-T₅).

7. Method according to claim 6, wherein the speed of the navigation system is evaluated using pseudo-speeds (PV₁-PV₅) calculated for the valid transmitters (T₁-T₅), and the pseudo-speed (*P̂d_{N}*) is estimated using said evaluated speed and ephemeris data concerning said invalid transmitter.

8. Method according to one of claims 1 to 3, wherein the coherency checking is implemented according to one of claims 4 or 5, and the coherency checking according to one of claims 6 or 7.

9. Method according to one of claims 4 to 8, wherein the coherency is proved when the coherency checking has been successfully passed a plurality of times.

10. Method according to one of claims 1 to 9, wherein the sets of raw GNSS measurements passing the coherency checking correspond to sets that are not rejected by an autonomous integrity monitoring RAIM.

11. Navigation system comprising a GNSS receiver having an antenna (A) able to receive signals from a plurality of transmitters (T₁-T₅,N), calculation means (10), suitable for calculating, for each transmitter (T₁-T₅,N), a set of raw GNSS measurements, and means (40, 50) configured to elaborate a navigation solution (41, 51) from a plurality of sets of raw GNSS measurements, with the system further comprising means (50) configured to check, for a transmitter (N) of which the set of raw GNSS measurements is not used in the elaboration of the navigation solution, the coherency of the set of raw GNSS measurements calculated for said transmitter (N) with the navigation solution, a transmitter being marked as valid when its set of raw GNSS measurements is considered to be sufficiently coherent to be able to be used in the elaboration of the navigation solution, and a transmitter being marked as invalid as long as the coherency of the set of raw GNSS measurements calculated for the invalid transmitter with the navigation solution elaborated from valid transmitters is not proved,
wherein:
- the means (40, 50) configured to elaborate a navigation solution are configured to, once the coherency is proved, use the set of raw GNSS measurements calculated for said transmitter (N), and
**characterised in that**:
- said means are furthermore configured to implement, for an initially valid transmitter (T₁), a prior step of invalidating said transmitter in order to exclude it from the elaboration of the navigation solution, and to authorise the reuse thereof in the elaboration of the navigation solution and to revalidate it only after checking of the coherency of the set of raw GNSS measurements calculated for this invalidated transmitter (T1), with the navigation solution elaborated from valid transmitters (T₂-T₅).
